(19) Europäisches Patentamt
European Patent Office
Office européen des brevets

(11) Veröffentlichungsnummer : **0 425 932 B1**

(12) **EUROPÄISCHE PATENTSCHRIFT**

(45) Veröffentlichungstag der Patentschrift : **05.01.94 Patentblatt 94/01**

(51) Int. Cl.$^5$ : **C09B 23/08,** G11B 7/24

(21) Anmeldenummer : **90120079.0**

(22) Anmeldetag : **19.10.90**

(54) **Chinoxalinpentamethinfarbstoffe sowie optisches Aufzeichnungsmedium, enthaltend die neuen Farbstoffe.**

(30) Priorität : **28.10.89 DE 3936051**

(43) Veröffentlichungstag der Anmeldung : **08.05.91 Patentblatt 91/19**

(45) Bekanntmachung des Hinweises auf die Patenterteilung : **05.01.94 Patentblatt 94/01**

(84) Benannte Vertragsstaaten : **CH DE FR GB IT LI**

(56) Entgegenhaltungen :
**EP-A- 0 217 245**
**FR-A- 821 396**
**US-A- 4 460 665**

(73) Patentinhaber : **BASF Aktiengesellschaft**
**Carl-Bosch-Strasse 38**
**D-67063 Ludwigshafen (DE)**

(72) Erfinder : **Acker, Michael, Dr.**
**Glockenzehnten 45**
**W-6900 Heidelberg (DE)**
Erfinder : **Neumann, Peter, Dr.**
**Poststrasse 28**
**W-6800 Mannheim 31 (DE)**
Erfinder : **Albert, Bernhard, Dr.**
**Rietburgstrasse 13**
**W-6701 Maxdorf (DE)**
Erfinder : **Brosius, Sibylle, Dr.**
**Cordovastrasse 29**
**W-6700 Ludwigshafen (DE)**
Erfinder : **Schomann, Klaus Dieter, Dr.**
**Kopernikusstrasse 47**
**W-6700 Ludwigshafen (DE)**
Erfinder : **Kuppelmaier, Harald, Dr.**
**In den Bannzaeunen 17**
**W-6701 Goennheim (DE)**

**EP 0 425 932 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Chinoxalinpentamethinfarbstoffe der Formel I

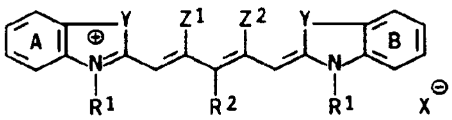

(I),

in der

| | |
|---|---|
| $R^1$ | gleich oder verschieden ist und jeweils Wasserstoff, $C_1$-$C_{22}$-Alkyl, das gegebenenfalls substituiert ist und durch ein oder mehrere Sauerstoffatome unterbrochen sein kann oder gegebenenfalls substituiertes $C_5$-$C_7$-Cycloalkyl, |
| $R^2$ | Wasserstoff, Chlor, Brom oder $C_1$-$C_6$-Alkyl, |
| Y | gleich oder verschieden ist und jeweils einen Rest der Formel $-N=C(CH_3)-$ oder $-N(R^1)-CO-$, worin $R^1$ die obengenannte Bedeutung besitzt, |
| $Z^1$ und $Z^2$ | jeweils Wasserstoff oder zusammen auch gegebenenfalls durch $C_1$-$C_4$-Alkyl substituiertes $C_2$-$C_3$-Alkylen und |
| $X^{\ominus}$ | ein Anion bedeuten und |
| die Ringe A und B | gleich oder verschieden und unabhängig voneinander gegebenenfalls substituiert und/oder benzoanelliert sind, |

sowie ein optisches Aufzeichnungsmedium, enthaltend die neuen Farbstoffe.

Aufzeichnungsmedien, die mit Strahlen hoher Energiedichte, z.B. Laserlicht, eine lokal begrenzte Zustandsänderung erfahren, sind bekannt. Mit dieser thermisch ausgelösten Zustandsänderung, z. B. Verdampfen, Änderung des Fließverhaltens oder Ausbleichen, ist eine Änderung der optischen Eigenschaften, beispielsweise der Absorption durch Änderung des Absorptionsmaximums oder der Extinktion verbunden, welche zur Informations- oder Datenaufzeichnung ausgenutzt werden kann.

Als Lichtquelle für ein optisches Aufzeichnungsmedium eignen sich beispielsweise Halbleiterlaser, die Licht im nahen Infrarot emittieren. Festkörper-Injektionlaser, vor allem der AlGaAs-Laser, der im Wellenlängenbereich zwichen etwa 650 und 900 nm arbeitet, sind hierbei besonders zu nennen. Daher besteht besonders Interesse an solchen Aufzeichnungsmaterialien, die Strahlung im Wellenlängenbereich zwischen ca. 650 und 900 nm absorbieren und sich zu dünnen, homogenen Schichten verarbeiten lassen.

So sollen nach der Lehre der JP-A-112 790/1983 (US-A-4 460 665) sowie der JP-A-125 246/1983 Methinfarbstoffe für diesen Zweck verwendet werden. Die aus dem Stand der Technik bekannten Farbstoffe weisen aber häufig noch Mängel in ihrem anwendungstechnischen Eigenschaftsprofil auf.

Neutrale Methinfarbstoffe, die einen Oxidazolkern und am $\alpha$-Kohlenstoffatom der Methinkette einen elektronenziehenden Rest enthalten, sind aus der EP-A-0 217 245 bekannt.

Aufgabe der vorliegenden Erfindung war es, neue strahlungsempfindliche Produkte bereitzustellen, die im Wellenlängenbereich der verwendeten Halbleiterlaser eine gute Reflexion und eine hohe Absorption aufweisen. Sie sollten außerdem in einfacher Weise herzustellen, über einen langen Zeitraum hinweg stabil und in Polymeren leicht löslich sein. Der Erfindung lag weiterhin die Aufgabe zugrunde, ein neues optisches Aufzeichungsmedium bereitzustellen, wobei die die neuen Produkte enthaltenden Schichten homogen sein, eine gute Haftung auf den gebräuchlichen Trägermaterialien aufweisen und über einen langen Zeitraum hinweg stabil sein sollten. Darüber hinaus sollten diese Aufzeichnungsmedien mittels eines Halbleiterlasers beschreibbar und anschließend gut lesbar sein und sich durch ein möglichst hohes Signal : Rausch-Verhältnis auszeichnen.

Demgemäß wurden die oben näher bezeichneten Chinoxalinpentamethinfarbstoffe der Formel I gefunden.

Alle in den obengenannten Resten der Formel I auftretenden Alkyl- und Alkylengruppen können sowohl geradkettig als auch verzweigt sein.

Wenn die Ringe A und B in Formel I substituiert sind, können als Substituenten z. B. $C_1$-$C_{12}$-Alkyl, das gegebenenfalls durch ein oder mehrere, insbesondere 1 bis 3 Sauerstoffatome unterbrochen ist, Phenyl, Hydroxy, Halogen, dabei insbesondere Chlor oder Brom, $C_1$-$C_{22}$-Alkoxy, $C_1$-$C_{10}$-Alkylthio, Phenylthio, Cyano, Amino, $C_1$-$C_{16}$-Mono- oder Dialkylamino, Pyrrolidino, Piperidino, Morpholino, Piperazino, N-($C_1$-$C_4$-Alkyl)piperazino oder Hydroxysulfonyl in Betracht kommen.

Wenn der Rest $R^1$ substituiertes $C_1$-$C_{22}$-Alkyl bedeutet, können z.B. Hydroxy, Methacryloyloxy, Phenyl, Halogen, Carboxy, Hydroxsulfonyl, $C_1$-$C_4$-Alkanoyl, $C_1$-$C_4$-Alkanoylamino, $C_1$-$C_4$-Alkoxycarbonyl oder $C_1$-$C_4$-Alkoxy carbonylamino als Substituenten in Betracht kommen. Die Alkylkette kann außerdem durch ein oder

mehrere, insbesondere 1 bis 3 Sauerstoffatome unterbrochen sein.

Wenn $R^1$ für substituiertes $C_5$-$C_7$-Cycloalkyl steht, können als Substituenten z. B. $C_1$-$C_4$-Alkyl oder Halogen, dabei insbesondere Chlor oder Brom, in Betracht kommen.

Geeignete Reste $R^1$ und $R^2$ sind beispielsweise Methyl, Ethyl, Propyl, Isopropyl, Butyl, Isobutyl, sec-Butyl oder tert-Butyl.

Reste $R^1$ sind weiterhin z.B. Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl, Heneicosyl, Docosyl (die Bezeichnungen Isooctyl, Isononyl, Isodecyl und Isotridecyl sind Trivialbezeichnungen und stammen von den nach der Oxosynthese erhaltenen Alkoholen [vgl. dazu Ullmanns Encyklopädie der technischen Chemie, 4. Auflage, Band 7, Seiten 215 bis 217, sowie Band 11, Seiten 435 und 436]), Benzyl, 1- oder 2-Phenylethyl, Fluormethyl, Chlormethyl, Brommethyl, Difluormethyl, Trifluormethyl, Trichlormethyl, 2-Fluorethyl, 2-Chlorethyl,2-Bromethyl, 1,1-Difluorethyl, 1,1,1-Trifluorethyl, Heptafluorpropyl, 4-Chlorbutyl, 4-Brombutyl, 5-Fluorpentyl, 6-Chlorhexyl, 2-Methoxyethyl, 2-Ethoxyethyl, 2-Propoxyethyl, 2-Isopropoxyethyl, 2-Butoxyethyl, 2-Benzyloxyethyl, 2- oder 3-Methoxypropyl, 2- oder 3-Ethoxypropyl, 2- oder 3-Benzyloxypropyl, 2- oder 4-Ethoxybutyl, 2- oder 4-Isopropoxybutyl, 5-Ethoxypentyl, 6-Methoxyhexyl, 3,6-Dioxaheptyl, 3,6-Dioxaoctyl, 3,6-Dioxadecyl, 3,6,9-Trioxadecyl, 4-Oxa-6-ethyldecyl, 3,6-Dioxa-7-phenylheptyl, Propan-2-on-1-yl, Butan-3-on-1-yl, Butan-3-on-2-yl, 2-Ethylpentan-3-on-1-yl, Carboxymethyl, 2-Carboxyethyl, 3-Carboxypropyl, 4-Carboxybutyl, 5-Carboxypentyl, 4-Carboxy-3-oxabutyl, Acetylaminomethyl, 2-Acetylaminoethyl, 2-Propionylaminoethyl, 2-Butyrylaminoethyl, Ethoxycarbonylmethyl, 2-Ethoxycarbonylethyl, 2-oder 3-Methoxycarbonylpropyl, Ethoxycarbonylaminomethyl, 2-(Ethoxycarbonylamino)ethyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 7-Hydroxyheptyl, 8-Hydroxyoctyl, 2-Methacryloyloxyethyl, 2- oder 3-Methacryloyloxypropyl, 2- oder 4-Methacryloyloxybutyl, 2-Hydroxysulfonylethyl, 2- oder 3-Hydroxysulfonylpropyl, 2- oder 4-Hydroxysulfonylbutyl, Cyclopentyl, Cyclohexyl, Cycloheptyl, 3-Methylcyclopentyl, 4-Methylcyclohexyl, 4-Ethylcyclohexyl oder 2,3-Dichlorcyclohexyl.

$Z^1$ und $Z^1$ sind zusammen z.B. $-(CH_2)_2-$, $-(CH_2)_3-$, $-CH(CH_3)-CH_2-$, $-CH(C_2H_5)-CH_2-$, $-CH_2-CH(CH_3)-CH_2-$ oder $-CH_2-CH(C_2H_5)-CH_2-$.

$X^\ominus$ in Formel I bedeutet ein Anion. Dabei kommen sowohl anorganische als auch organische Anionen in Betracht. Geeignete Anionen sind z.B. Halogenid, wie Chlorid, Bromid oder Iodid, Sulfat, Perchlorat, Phosphat, Tetrafluoroborat, Trichlorozinkat, Methylsulfonat, Phenylsulfonat, 4-Methylphenylsulfonat, Methosulfat, Ethosulfat, Acetat, Lactat, Salicylat oder Tetraphenylboranat. Erfindungsgemäß sollen auch solche Farbstoffe der Formel I umfasst werden, die Betainstruktur aufweisen, d. h. bei denen die anionische Gruppe Bestandteil des Farbstoffmoleküls ist.

$X^\ominus$ kann weiterhin beispielsweise auch ein Anion einer Heteropolysäure auf der Basis Wolfram und/oder Molybdän mit Phosphor, Silicium, Vanadium, Kobalt, Aluminium, Mangan, Chrom und/oder Nickel sein. Weiterhin kommt z.B. auch das Kupfer(I)-hexacyanoferrat-(II)-anion in Betracht.

Die Herstellung der Heteropolysäuren oder der Salze dieser Säuren ist bekannt. Die Säuren werden durch Ansäuern von Lösungen der Wolframate, Molybdate und/oder Vanadate in Form der Alkali- und/oder Ammoniumsalze in Gegenwart von Phosphat und/oder wasserlöslichen Silicaten erhalten. Dabei können durch Wahl der Gewichtsverhältnisse von Wolframat, Molybdat und Vanadat sowie von Phosphat und Silicat verschiedenartige Heteropolysäuren aufgebaut werden. Als Beispiele für Heteropolysäuren sind zu nennen:

Phosphormolybdänsäure, Silicomolybdänsäure, Phosphorwolframsäure, Silicowolframsäure, Phosphorvanadinsäure, Silicovanadinsäure, Phosphorwolframmolybdänsäure, Silicowolframmolybdänsäure, Phosphor- oder Silicowolframvanadinsäure oder Phosphorsilicowolframmolybdänsäure die gegebenenfalls noch Vanadin eingebaut enthält.

Bevorzugt sind solche Chinoxalinpentamethinfarbstoffe der Formel I, in der

| | |
|---|---|
| $R^1$ | Wasserstoff oder gegebenenfalls durch 1 bis 3 Sauerstoffatome unterbrochenes $C_1$-$C_{22}$-Alkyl, $C_1$-$C_{22}$-Bromalkyl, $C_1$-$C_{12}$-Hydroxyalkyl, $C_1$-$C_{12}$-Methacryloyloxyalkyl, $C_1$-$C_{12}$-Hydroxysulfonylalkyl, $C_1$-$C_6$-Carboxyalkyl oder ($C_1$-$C_4$-Alkoxycarbonyl)-$C_1$-$C_6$-alkyl, |
| $R^2$ | Wasserstoff, Chlor, Brom oder $C_1$-$C_4$-Alkyl und |
| $Z^1$ und $Z^2$ | jeweils Wasserstoff oder zusammen gegebenenfalls durch $C_1$-$C_4$-Alkyl substituiertes $C_2$-$C_3$-Alkylen bedeuten und |
| die Ringe A und B | gegebenenfalls durch Amino, Chlor, Brom, Hydroxysulfonyl oder $C_1$-$C_6$-Alkyl substituiert und/oder benzoanelliert sind. |

Besonders bevorzugt sind solche Chinoxalinpentamethinfarbstoffe der Formel I, in der

| | |
|---|---|
| $R^1$ | gegebenenfalls durch 1 bis 3 Sauerstoffatome unterbrochenes $C_1$-$C_{12}$-Alkyl, $C_1$-$C_{12}$-Bromalkyl, $C_1$-$C_{12}$-Hydroxysulfonylalkyl oder ($C_1$-$C_4$-Alkoxycarbonyl)-$C_1$-$C_6$-alkyl, |

| | |
|---|---|
| $R^2$ | Wasserstoff, Chlor, Brom oder $C_1$-$C_3$-Alkyl und |
| $Z^1$ und $Z^2$ | jeweils Wasserstoff bedeuten und |
| die Ringe A und B | unsubstituiert sind. |

Bevorzugte Anionen $X^{\ominus}$ sind Chlorid, Bromid, Iodid, Perchlorat, Tetrafluoroborat, 4-Methylphenylsulfonat, Methylsulfonat, Methosulfat, Tetraphenylboramat oder Salicylat.

Die Herstellung der erfindungsgemäßen Farbstoffe erfolgt nach an sich bekannten Methoden, beispielsweise durch Kondensation von Cyclammoniumverbindungen der Formel II oder III

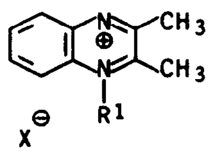

(II)

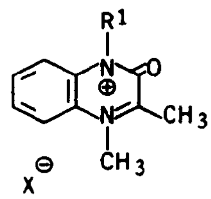

(III)

wobei $R^1$ und $X^{\ominus}$ jeweils die obengenannte Bedeutung besitzen, oder ausgehend von einem Chinoxalin der Formel IV

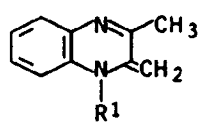

(IV),

in der $R^1$ die obengenannte Bedeutung besitzt, mit Komponenten der Formel V, VI, VII oder VIII

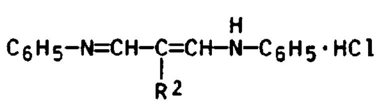
;
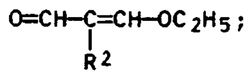
;
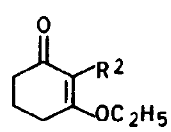
;
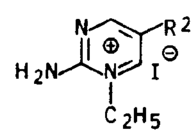

(V) (VI) (VII) (VIII)

wobei $R^2$ jeweils die obengenannte Bedeutung besitzt, in einem inerten Lösungsmittel, gegebenenfalls unter Basenkatalyse, bei einer Temperatur von 20 bis 140°C.

Als inerte Lösungsmittel für die Umsetzungen kommen z.B. Ethanol, Acetanhydrid, Pyridin, Eisessig oder kompatible Gemische davon in Betracht. Geeignete Basen sind z. B. Triethylamin oder Piperidin.

Weitere Einzelheiten der Herstellung können den Beispielen entnommen werden.

Bei den als Ausgangsprodukten verwendeten Verbindungen der Formeln II bis VIII handelt es sich im wesentlichen um an sich bekannte Verbindungen.

Die neuen Chinoxalinpentamethinfarbstoffe der Formel I weisen eine hohe molare Absorption im Bereich von 750 bis 800 nm auf. Sie sind zudem in organischen Lösungsmitteln sowie in thermoplastischen oder vernetzten Kunststoffen gut löslich.

Die Erfindung betrifft weiterhin ein optisches Aufzeichnungsmedium, enthaltend einen Träger und eine gegenüber Laserlicht empfindliche, Farbstoff enthaltende Schicht, dadurch gekennzeichnet, daß der Farbstoff ein Chinoxalinpentamethinfarbstoff der Formel I

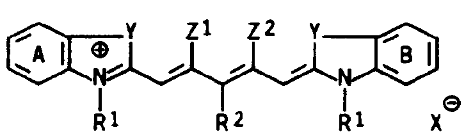

(I)

ist, in der

| | |
|---|---|
| $R^1$ | gleich oder verschieden ist und jeweils Wasserstoff, $C_1$-$C_{22}$-Alkyl, das gegebenenfalls substituiert ist und durch ein oder mehrere Sauerstoffatome unterbrochen sein kann oder gegebenenfalls substituiertes $C_5$-$C_7$-Cycloalkyl, |
| $R^2$ | Wasserstoff, Chlor, Brom oder $C_1$-$C_6$-Alkyl, |
| Y | gleich oder verschieden ist und jeweils einen Rest der Formel -N=C($CH_3$)- oder -N($R^1$)-CO-, worin $R^1$ die obengenannte Bedeutung besitzt, |
| $Z^1$ und $Z^2$ | jeweils Wasserstoff oder zusammen auch gegebenenfalls durch $C_1$-$C_4$-Alkyl substituiertes $C_2$-$C_3$-Alkylen und |
| $X^{\ominus}$ | ein Anion bedeuten, und |
| die Ringe A und B | gleich oder verschieden und unabhängig voneinander gegebenenfalls substituiert und/oder benzoanelliert sind. |

Bevorzugt ist ein optisches Aufzeichnungsmedium, das einen Chinoxalinpentamethinfarbstoff der Formel I enthält, in der

| | |
|---|---|
| $R^1$ | Wasserstoff oder gegebenenfalls durch 1 bis 3 Sauerstoffatome unterbrochenes $C_1$-$C_{22}$-Alkyl, $C_1$-$C_{22}$-Bromalkyl, $C_1$-$C_{12}$-Hydroxyalkyl, $C_1$-$C_{12}$-Methacryloyloxyalkyl, $C_1$-$C_{12}$-Hydroxysulfonylalkyl, $C_1$-$C_6$-Carboxyalkyl oder ($C_1$-$C_4$-Alkoxycarbonyl)-$C_1$-$C_6$-alkyl, |
| $R^2$ | Wasserstoff, Chlor, Brom oder $C_1$-$C_4$-Alkyl, |
| $Z^1$ und $Z^2$ | jeweils Wasserstoff oder zusammen auch gegebenenfalls durch $C_1$-$C_4$-Alkyl substituiertes $C_2$-$C_3$-Alkylen bedeuten und |
| die Ringe A und B | gebenenfalls durch Amino, Chlor, Brom, Hydroxysulfonyl oder $C_1$-$C_6$-Alkyl substituiert und/oder benzoanelliert sind. |

Besonders bevorzugt ist ein optisches Aufzeichnungsmedium, das einen Chinoxalinpentamethinfarbstoff der Formel I enthält, in der

| | |
|---|---|
| $R^1$ | gegebenenfalls durch 1 bis 3 Sauerstoffatome unterbrochenes $C_1$-$C_{12}$-Alkyl, $C_1$-$C_{12}$-Bromalkyl, $C_1$-$C_{12}$-Hydroxysulfonylalkyl oder ($C_1$-$C_4$-Alkoxycarbonyl)-$C_1$-$C_6$-alkyl, |
| $R^2$ | Wasserstoff, Chlor, Brom oder $C_1$-$C_3$-Alkyl und |
| $Z^1$ und $Z^2$ | jeweils Wasserstoff bedeuten und |
| die Ringe A und B | gleich und unsubstituiert sind. |

Als Träger kommen z. B. Glasplatten oder -scheiben, oder Kunststoffplatten oder -scheiben, insbesondere Platten oder Scheiben aus Polymethylmethacrylat, Polystyrol, Polystyrol-Copolymeren, Polyvinylchlorid, Polymethylpenten oder Polycarbonat in Betracht, die gegebenenfalls Spurrillen aufweisen.

Der Träger kann dabei die Form eines Bandes, einer quadratischen oder rechteckigen Platte oder vorzugsweise einer runden Scheibe haben, wobei die für laseroptische Aufzeichnungsmaterialien üblichen und bekannten Scheiben eines Durchmessers von 10 oder 13 cm bevorzugt werden.

Das erfindungsgemäße Aufzeichnungsmedium kann frei von Bindemitteln sein. Vorzugsweise enthält das Aufzeichnungsmedium aber ein Bindemittel. Als solche kommen beispielsweise Siliconharze, Epoxidharze, Acrylatharze, Polystyrolhomo- und -copolymerisate, Polyvinylcarbazol, Polyvinylpyrrolidon, Polyvinylestercopolymere, Polyvinylidenchloridcopolymere oder Polyvinylchlorid in Betracht.

Zwischen der lichtabsorbierenden Schicht und dem Träger kann eine reflektierende Schicht vorhanden sein, so daß das eingestrahlte und durch die farbige Schicht wandernde Licht, so weit es nicht absorbiert wird, an der Reflektorschicht reflektiert wird und nochmals durch die gefärbte Schicht wandert.

Die Belichtung kann auch durch ein transparentes Substrat erfolgen. Als Schichtfolge kommt dann die Anordnung Substrat-Absorberschicht - gegebenenfalls Reflektorschicht in Betracht.

Geeignete lichtreflektierende Materialien sind z. B. Aluminium, Rhodium, Gold, Zinn, Blei, Wismut, Kupfer oder dielektrische Spiegel. Die lichtreflektierende Schicht sollte so dick sein, daß sie das zur Aufnahme oder zum Abtasten benutzte Licht möglichst vollständig reflektiert.

Für diesen Zweck sind Spiegel mit geringer Wärmeleitfähigkeit vorteilhaft. Der Träger oder die lichtreflektierende Schicht müssen eine optisch glatte, ebene Oberfläche aufweisen und an der Oberfläche so beschaffen sein, daß die absorbierende Schicht darauf fest haftet. Um die Oberflächenqualität und Adhäsionsphänomene günstig zu beeinflussen kann der Träger und/oder der Reflektor mit einer Glättungsschicht aus einem duroplastischen oder thermoplastischen Material versehen werden.

Für den Fall, daß das das optische Aufzeichnungsmedium einen metallischen Reflektor aufweist, erfolgt das Aufbringen der metallischen Reflektionsschicht vorzugsweise nach bekannten Methoden, z. B. durch Aufdampfen im Vakuum oder auch durch Aufbringen geeigneter Metallfolien auf den Träger.

Das erfindungsgemäße Aufzeichnungsmedium wird durch Aufschleudern einer Lösung, enthaltend einen Farbstoff der Formel I, gegebenenfalls ein polymeres Bindemittel und ein Lösungsmittel, auf einen Träger aufgebracht und die Schicht an der Luft getrocknet. Der Film kann auch im Vakuum, bei erhöhter Temperatur oder gegebenenfalls mit Strahlung getrocknet werden.

Als geeignete Lösungsmittel sind z. B. 1,1,2-Trichlorethan, Methylethylketon, Diacetonalkohol, Toluol, Methanol, Ethanol, Propanol oder deren Gemische zu nennen.

Gegebenenfalls kann die aufzuschleudernde Lösung Additive, wie Antioxidantien, Singulett-Sauerstoff-Quencher oder UV-Absorber enthalten.

Es ist weiterhin auch möglich, auf die Farbstoff-in-Polymer-Schicht eine Schutzschicht aufzubringen. Hierzu bieten sich eine Reihe von Polymeren an, welche durch Aufschleudern, Aufrakeln, Tauchen von gelösten Polymeren oder durch Aufdampfen im Vakuum, insbesondere von fluorierten Polymeren, eine Schutzschicht bilden können.

Wenn das Aufzeichnungssystem aus zwei gleichen oder verschiedenen Aufzeichnungsmedien in Form eines "Sandwich" aufgebaut wird, kann im allgemeinen auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschicht kann bei ausreichender Qualität des optischen Aufzeichungsmediums üblicherweise verzichtet werden. Wenn aber auf Zwischenschichten nicht verzichtet werden kann, muß unter Berücksichtigung des Brechungsindex des dazu verwendeten Materials und der verwendeten Laserlichtwellenlänge deren Schichtdicke so gewählt werden, daß keine störenden Interferenzen auftreten können.

Das erfindungsgemäße optische Aufzeichnungsmedium weist bei der Wellenlänge der kommerziell erhältlichen Halbleiterlaser (ca. 650 bis 900 nm) eine hohe Absorption auf. Die Farbstoff-in-Polymer-Systeme können auf eine lichtreflektierende Schicht so aufgebracht werden, daß sich glatte, homogene Absorptionsschichten hoher optischer Qualität ergeben, die eine günstige Schwellenenergie besitzen und in die die zu speichernde Information in Form von Pits eingeschrieben werden kann, wodurch ein ausgezeichnetes Signal : Rausch-Verhältnis resultiert.

Die Aufzeichungsmedien gemäß der vorliegenden Erfindung sind mit einem Halbleiter-Laser beschreibbar und lesbar. Aufzeichnungsmedien gemäß der Erfindung sind gegenüber atmosphärischen Einflüssen und Tageslicht sehr stabil.

Aufgrund der hohen Lichtabsorption der Chinoxalinpentamethinfarbstoffe der Formel I sind die neuen Aufzeichungsmedien sehr empfindlich gegenüber dem Licht von im nahen Infrarot emittierenden Festkörper-Injektionslasern. Insbesondere ist hier der AlGaAs-Laser zu nennen, der im Wellenlängenbereich von 750 bis 950 nm arbeitet. Aufgrund der geringen Größe des Bauelementes, seines geringen Energiebedarfs und der Möglichkeit der direkten Modulation der optischen Ausgangsleistung durch Modulation des elektrischen Antriebsstromes eignen sich solche Lasertypen besonders gut.

Die folgenden Beispiele sollen die Erfindung näher erläutern.

A) Herstellung der Farbstoffe

Beispiel 1

Zu 2,85 g (33 mmol) Diacetyl in 60 ml Acetanhydrid wurden bei Raumtemperatur unter Rühren 9,1 g (33 mmol) N-(n-Dodecyl)-o-phenylendiamin gegeben und 15 Minuten bei Raumtemperatur gerührt. Man versetzte dann mit 3,6 g (15 mmol) 3-Methylmalondialdehydbisanil und ließ 5 Stunden bei Raumtemperatur ruhren. Anschließend fügte man 2,25 g (15 mmol) Natriumiodid zu, rührte weitere 2 Stunden und saugte dann den ausgefallenen Farbstoff ab. Man wusch den Filterrückstand mit wenig Acetanhydrid und Ether und trocknete unter vermindertem Druck. Man erhielt einen Farbstoff der Formel

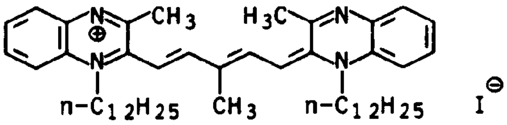

Ausbeute: 1,82 g (13 % der Theorie); Schmp.: 135-136 °C;
λmax = 795 nm (in $CH_2Cl_2$).

Beispiel 2

5,0 g (21 mmol) 2-Methyl-4-(4-oxapentyl)chinoxal-3-on wurden mit 2,1 g (17 mmol) Dimethylsulfat versetzt

und während 15 Minuten auf 150 °C erhitzt. Nach Abkühlen wurden 10 ml Acetanhydrid, 7 ml Pyridin und anschließend 2,3 g (7,5 mmol) Mucobromsäurebisanil-hydrobromid zugegeben.

Das Reaktionsgemisch wurde 60 Minuten bei Raumtemperatur gerührt. Der ausgefallene Farbstoff wurde abgesaugt, zunächst mit wenig Acetanhydrid und dann mit Ether mehrmals gewaschen. Nach dem Trocknen erhielt man einen Farbstoff der Formel

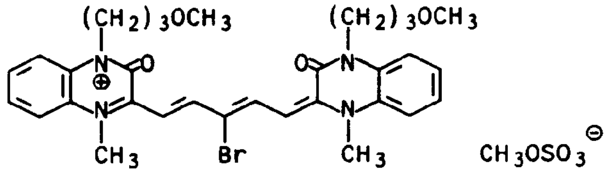

als grünen, metallisch glänzenden Feststoff.
Ausbeute: 2,5 g (30 % der Theorie); Schmp.: 210-212 °C;
λmax = 761 nm (in $CH_2Cl_2$).

Beispiel 3

2,6 g (8 mmol) 4-n-Dodecyl-2-methylchinoxal-3-on wurden mit 1,13 g (9 mmol) Dimethylsulfat vermischt und unter Rühren 15 Minuten auf 150 °C erhitzt. Anschließend kühlte man auf Raumtemperatur ab, setzte 6 ml Acetanhydrid, 4 ml Pyridin und 0,9 g (4 mmol) 3-Methylmalondialdehydbisanil zu. Das Reaktionsgemisch wurde 1 Stunde bei Raumtemperatur gerührt und dann mit einer Lösung von 1,2 g Natriumiodid in 10 ml Methanol vereinigt. Nach weiteren 10 Minuten Rühren bei Raumtemperatur saugte man den ausgefallenen Farbstoff der Formel

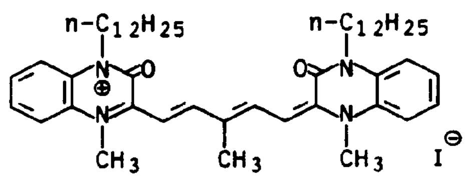

ab.
Ausbeute: 1,7 g (50 % der Theorie); Schmp.: 135-136 °C;
λmax = 756 nm (in $CH_2Cl_2$).

Die im folgenden aufgeführten Farbstoffe wurden analog den Beispielen 1 bis 3 hergestellt.

| Bsp. Nr. | Farbstoff | λmax [nm] | Lösungsmittel |
|---|---|---|---|
| 4 | 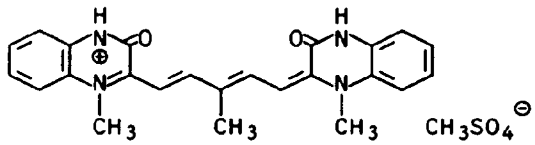 | 742 | $CH_2Cl_2$ |
| 5 | 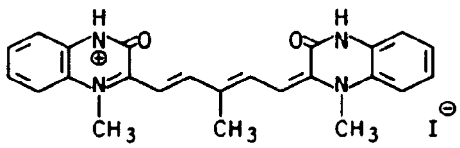 | 742 | $CH_2Cl_2$ |
| 6 | 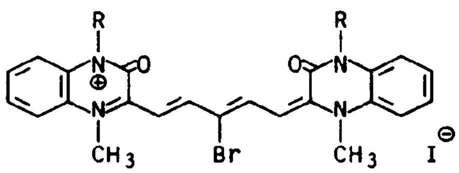 R = $C_2H_4OC_2H_4OC_2H_5$ | 752 | $CH_2Cl_2$ |
| 7 | 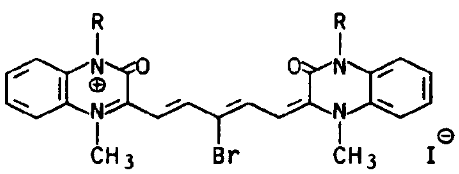 R = $(CH_2)_3OCH_3$ | 755 | $CH_2Cl_2$ |
| 8 | 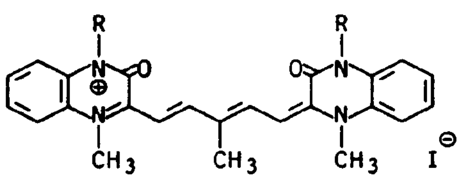 R = $C_{12}H_{25}$ | 756 | $CH_2Cl_2$ |
| 9 | 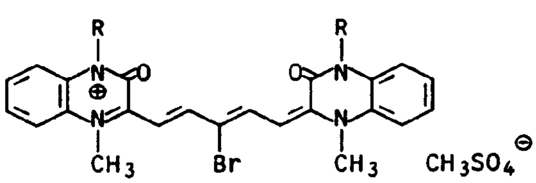 R = $(CH_2)_3OCH_3$ | 755 | $CH_2Cl_2$ |

| Bsp. Nr. | Farbstoff | λmax [nm] | Lösungsmittel |
|---|---|---|---|
| 10 | 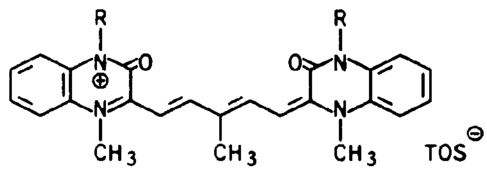 $TOS^{\ominus}$<br>R = $n-C_{12}H_{25}$ | 756 | $CH_2Cl_2$ |
| 11 | 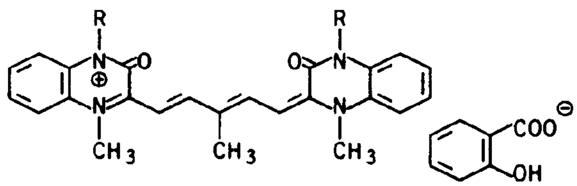<br>R = $(CH_2)_3OCH_3$ | 756 | $CH_2Cl_2$ |
| 12 | 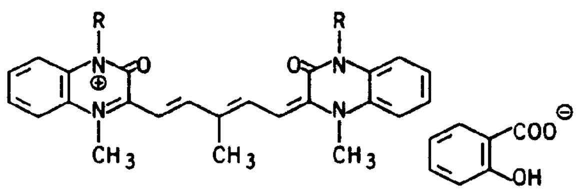<br>R = $(CH_2)_3OCH—C_4H_9$<br>$C_2H_5$ | 756 | $CH_2Cl_2$ |
| 13 | 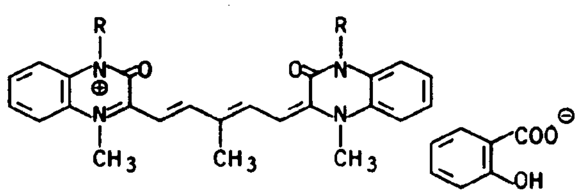<br>R = $C_2H_4OC_2H_4OAc$ | 756 | $CH_2Cl_2$ |
| 14 | 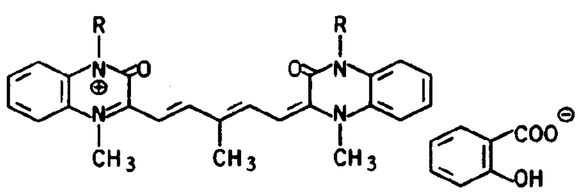<br>R = $HC—CH_2OCH_3$<br>$CH_3$ | 755 | $CH_2Cl_2$ |

| Bsp. Nr. | Farbstoff | λmax [nm] | Lösungsmittel |
|---|---|---|---|
| 15 | 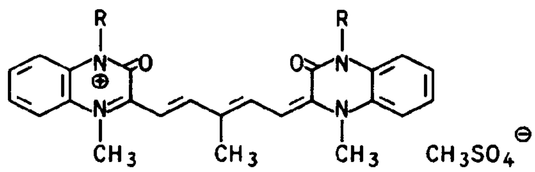<br>R = n-$C_{12}H_{25}$ | 761 | $CH_2Cl_2$ |
| 16 | 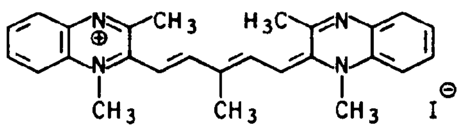 | 795 | $CH_2Cl_2$ |
| 17 | 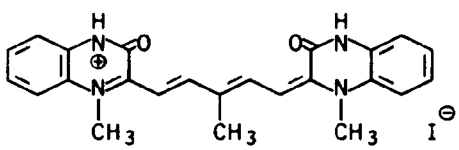 | 758 | $CH_2Cl_2$ |
| 18 | 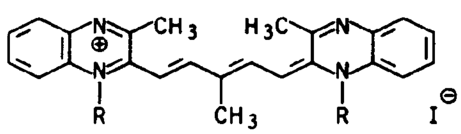<br>R = $(CH_2)_3OCH_3$ | 795 | $CH_2Cl_2$ |
| 19 | 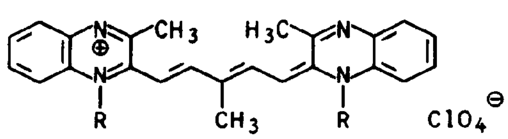<br>R = $(CH_2)_3OCH_3$ | 795 | $CH_2Cl_2$ |

| Bsp. Nr. | Farbstoff | λmax [nm] | Lösungsmittel |
|---|---|---|---|
| 20 | 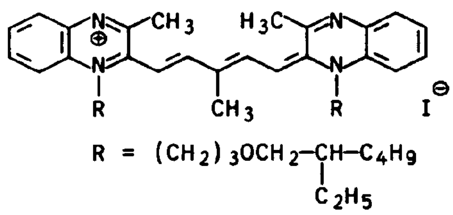 | 796 | $CH_2Cl_2$ |
| 21 | 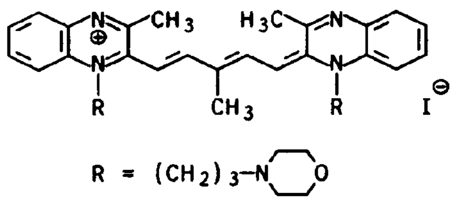 | 795 | $CH_2Cl_2$ |
| 22 | 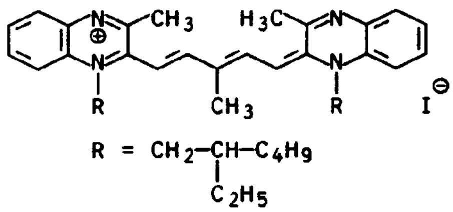 | 795 | $CH_2Cl_2$ |
| 23 | 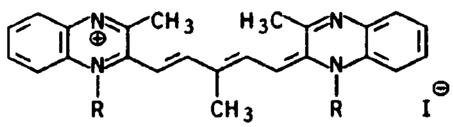 R = $CH_2CH_2CH_2OAc$ | 798 | $CH_2Cl_2$ |

B) Herstellung des optischen Aufzeichnungsmediums

0,134 g eines Copolymeren aus Methylmethacrylat/Methacrylsäure (70:30) wurden in 0,808 g Diacetonalkohol und 4,48 g Ethanol gelöst und 0,077 g Farbstoff aus Beispiel 1 zugesetzt. Nach 1 Stunden Rühren bei Raumtemperatur wurde filtriert und die Lösung bei 1800 U/min auf ein Polymethylmethacrylat-Substrat aufgeschleudert. Die auf diese Weise erhaltene Schicht ist homogen und ohne erkennbare Fehler. Sie weist eine breite Absorptionsbande auf; bei 830 nm beträgt die Extinktion 0,35. Die Schichtdicke beträgt 70 nm. Mit einem auf einem Drehtisch montierten AlGaAs-Laser werden einzelne, etwa 1 μ große Löcher in die aktive Schicht geschrieben. Die Empfindlichkeit der Schicht war besser als 1 nJ/Loch. Beim Auslesen der Punkte wurde ein ausgezeichnetes Signal:Rausch-Verhältnis gefunden.

## Patentansprüche

**1.** Chinoxalinpentamethinfarbstoffe der Formel I

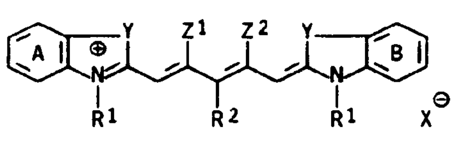 (I),

in der

| | |
|---|---|
| $R^1$ | gleich oder verschieden ist und jeweils Wasserstoff, $C_1$-$C_{22}$-Alkyl, das gegebenenfalls substituiert ist und durch ein oder mehrere Sauerstoffatome unterbrochen sein kann oder gegebenenfalls substituiertes $C_5$-$C_7$-Cycloalkyl, |
| $R^2$ | Wasserstoff, Chlor, Brom oder $C_1$-$C_6$-Alkyl, |
| Y | gleich oder verschieden ist und jeweils einen Rest der Formel -N=C($CH_3$)- oder -N($R^1$)-CO-, worin $R^1$ die obengenannte Bedeutung besitzt, |
| $Z^1$ und $Z^2$ | jeweils Wasserstoff oder zusammen auch gegebenenfalls durch $C_1$-$C_4$-Alkyl substituiertes $C_2$-$C_3$-Alkylen und |
| $X^\ominus$ | ein Anion bedeuten und |
| die Ringe A und B | gleich oder verschieden und unabhängig voneinander gegebenenfalls substituiert und/oder benzoanelliert sind. |

2. Chinoxalinpentamethinfarbstoffe nach Anspruch 1, dadurch gekennzeichnet, daß

| | |
|---|---|
| $R^1$ | Wasserstoff oder gegebenenfalls durch 1 bis 3 Sauerstoffatome unterbrochenes $C_1$-$C_{22}$-Alkyl, $C_1$-$C_{22}$-Bromalkyl, $C_1$-$C_{12}$-Hydroxyalkyl, $C_1$-$C_{12}$-Methacryloyloxyalkyl, $C_1$-$C_{12}$-Hydroxysulfonylalkyl, $C_1$-$C_6$-Carboxyalkyl oder ($C_1$-$C_4$-Alkoxycarbonyl)-$C_1$-$C_6$-alkyl, |
| $R^2$ | Wasserstoff, Chlor, Brom oder $C_1$-$C_4$-Alkyl und |
| $Z^1$ und $Z^2$ | jeweils Wasserstoff oder zusammen gegebenenfalls durch $C_1$-$C_4$-Alkyl substituiertes $C_2$-$C_3$-Alkylen bedeuten und |
| die Ringe A und B | gebenenfalls durch Amino, Chlor, Brom, Hydroxysulfonyl oder $C_1$-$C_6$-Alkyl substituiert und/oder benzoanelliert sind. |

3. Chinoxalinpentamethinfarbstoffe nach Anspruch 1, dadurch gekennzeichnet, daß

| | |
|---|---|
| $R^1$ | gegebenenfalls durch 1 bis 3 Sauerstoffatome unterbrochenes $C_1$-$C_{12}$-Alkyl, $C_1$-$C_{12}$-Bromalkyl, $C_1$-$C_{12}$-Hydroxysulfonylalkyl oder ($C_1$-$C_4$-Alkoxycarbonyl)-$C_1$-$C_6$-alkyl, |
| $R^2$ | Wasserstoff, Chlor, Brom oder $C_1$-$C_3$-Alkyl und |
| $Z^1$ und $Z^2$ | jeweils Wasserstoff bedeuten und |
| die Ringe A und B | unsubstituiert sind. |

4. Optisches Aufzeichnungsmedium, enthaltend einen Träger und eine gegenüber Laserlicht empfindliche, Farbstoff enthaltende Schicht, dadurch gekennzeichnet, daß der Farbstoff ein Chinoxalinpentamethinfarbstoff der Formel I

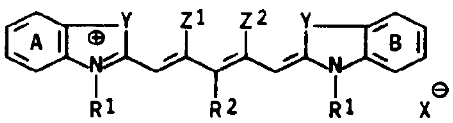
(I)

ist, in der

| | |
|---|---|
| $R^1$ | gleich oder verschieden ist und jeweils Wasserstoff, $C_1$-$C_{22}$-Alkyl, das gegebenenfalls substituiert ist und durch ein oder mehrere Sauerstoffatome unterbrochen sein kann oder gegebenenfalls substituiertes $C_5$-$C_7$-Cycloalkyl, |
| $R^2$ | Wasserstoff, Chlor, Brom oder $C_1$-$C_6$-Alkyl, |
| Y | gleich oder verschieden ist und jeweils einen Rest der Formel -N=C($CH_3$)- oder -N($R^1$)-CO-, worin $R^1$ die obengenannte Bedeutung besitzt, |
| $Z^1$ und $Z^2$ | jeweils Wasserstoff oder zusammen auch gegebenenfalls durch $C_1$-$C_4$-Alkyl substituiertes $C_2$-$C_3$-Alkylen und |
| $X^\ominus$ | ein Anion bedeuten, und |
| die Ringe A und B | gleich oder verschieden und unabhängig voneinander gegebenenfalls substituiert und/oder benzoanelliert sind. |

5. Optisches Aufzeichnungsmedium nach Anspruch 4, dadurch gekennzeichnet, daß

| | |
|---|---|
| $R^1$ | Wasserstoff oder gegebenenfalls durch 1 bis 3 Sauerstoffatome unterbrochenes $C_1$-$C_{22}$-Alkyl, $C_1$-$C_{22}$-Bromalkyl, $C_1$-$C_{12}$-Hydroxyalkyl, $C_1$-$C_{12}$-Methacry- |

| | |
|---|---|
| | loyloxyalkyl, $C_1$-$C_{12}$-Hydroxysulfonylalkyl, $C_1$-$C_6$-Carboxyalkyl oder ($C_1$-$C_4$-Alkoxycarbonyl)-$C_1$-$C_6$-alkyl, |
| $R^2$ | Wasserstoff, Chlor, Brom oder $C_1$-$C_4$-Alkyl, |
| $Z^1$ und $Z^2$ | jeweils Wasserstoff oder zusammen auch gegebenenfalls durch $C_1$-$C_4$-Alkyl substituiertes $C_2$-$C_3$-Alkylen bedeuten und |
| die Ringe A und B | gebenenfalls durch Amino, Chlor, Brom, Hydroxysulfonyl oder $C_1$-$C_6$-Alkyl substituiert und/oder benzoanelliert sind. |

6. Optisches Aufzeichnungsmedium nach Anspruch 4, dadurch gekennzeichnet, daß

| | |
|---|---|
| $R^1$ | gegebenenfalls durch 1 bis 3 Sauerstoffatome unterbrochenes $C_1$-$C_{12}$-Alkyl, $C_1$-$C_{12}$-Bromalkyl, $C_1$-$C_{12}$-Hydroxysulfonylalkyl oder ($C_1$-$C_4$-Alkoxycarbonyl)-$C_1$-$C_6$-alkyl, |
| $R^2$ | Wasserstoff, Chlor, Brom oder $C_1$-$C_3$-Alkyl und |
| $Z^1$ und $Z^2$ | jeweils Wasserstoff bedeuten und |
| die Ringe A und B | gleich und unsubstituiert sind. |

## Claims

1. A quinoxalinepentamethine dye of the formula I

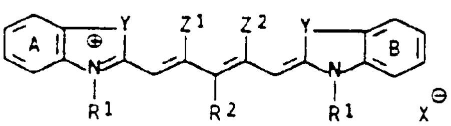

(I)

where

| | |
|---|---|
| $R^1$ | has identical or different meanings in each appearance, denoting in each case hydrogen, $C_1$-$C_{22}$-alkyl, which is substituted or unsubstituted and may be interrupted by one or more oxygen atoms, or substituted or unsubstituted $C_5$-$C_7$-cycloalkyl, |
| $R^2$ | is hydrogen, chlorine, bromine or $C_1$-$C_6$-alkyl, |
| Y | has identical or different meanings in each appearance, denoting in each case a radical of the formula $-N=C(CH_3)-$ or $-N(R^1)-CO-$, where $R^1$ is as defined above, |
| $Z^1$ and $Z^2$ | simply are each hydrogen or together are unsubstituted or $C_1$-$C_4$-alkyl-substituted $C_2$-$C_3$-alkylene, |
| $X^{\ominus}$ | is an anion, and |

the rings A and B are identical to or different from each other and independently of each other may be substituted and/or benzofused.

2. A quinoxalinepentamethine dye as claimed in claim 1, wherein

| | |
|---|---|
| $R^1$ | is hydrogen or $C_1$-$C_{22}$-alkyl, $C_1$-$C_{22}$-bromoalkyl, $C_1$-$C_{12}$-hydroxyalkyl, $C_1$-$C_{12}$-methacryloyloxyalkyl, $C_1$-$C_{12}$-hydroxysulfonylalkyl, $C_1$-$C_6$-carboxyalkyl, or ($C_1$-$C_4$-alkoxycarbonyl)-$C_1$-$C_6$-alkyl, which may each be interrupted by from 1 to 3 oxygen atoms, |
| $R^2$ | is hydrogen, chlorine, bromine or $C_1$-$C_4$-alkyl, |
| $Z^1$ and $Z^2$ | simply are each hydrogen or together are unsubstituted or $C_1$-$C_4$-alkyl-substituted $C_2$-$C_3$-alkylene, and |

the rings A and B may each be amino-, chlorine-, bromine-, hydroxysulfonyl- or $C_1$-$C_6$-alkyl-substituted and/or benzofused.

3. A quinoxalinepentamethine dye as claimed in claim 1, wherein

| | |
|---|---|
| $R^1$ | is $C_1$-$C_{12}$-alkyl, $C_1$-$C_{12}$-bromoalkyl, $C_1$-$C_{12}$-hydroxysulfonylalkyl or ($C_1$-$C_4$-alkoxycarbonyl)-$C_1$-$C_6$-alkyl, which may each be interrupted by from 1 to 3 oxygen atoms, |
| $R^2$ | is hydrogen, chlorine, bromine or $C_1$-$C_3$-alkyl, |
| $Z^1$ and $Z^2$ | are each hydrogen, and |

the rings A and B are unsubstituted.

4. An optical recording medium comprising a base and a dye layer which is sensitive to laser light, wherein

the dye is a quinoxalinepentamethine dye of the formula I

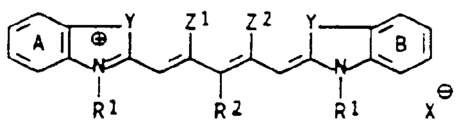

(I)

where

$R^1$ has identical or different meanings in each appearance, denoting in each case hydrogen, $C_1$-$C_{22}$-alkyl, which is substituted or unsubstituted and may be interrupted by one or more oxygen atoms, or substituted or unsubstituted $C_5$-$C_7$-cycloalkyl,

$R^2$ is hydrogen, chlorine, bromine or $C_1$-$C_6$-alkyl,

Y has identical or different meanings in each appearance, denoting in each case a radical of the formula $-N=C(CH_3)-$ or $-N(R^1)-CO-$, where $R^1$ is as defined above,

$Z^1$ and $Z^2$ simply are each hydrogen or together are unsubstituted or $C_1$-$C_4$-alkyl-substituted $C_2$-$C_3$-alkylene,

$X^{\ominus}$ is an anion, and

the rings A and B are identical to or different from each other and independently of each other may be substituted and/or benzofused.

5. An optical recording medium as claimed in claim 4, wherein

$R^1$ is hydrogen or $C_1$-$C_{22}$-alkyl, $C_1$-$C_{22}$-bromoalkyl, $C_1$-$C_{12}$-hydroxyalkyl, $C_1$-$C_{12}$-methacryloyloxyalkyl, $C_1$-$C_{12}$-hydroxysulfonylalkyl, $C_1$-$C_6$-carboxyalkyl or ($C_1$-$C_4$-alkoxycarbonyl)-$C_1$-$C_6$-alkyl, which may each be interrupted by from 1 to 3 oxygen atoms,

$R^2$ is hydrogen, chlorine, bromine or $C_1$-$C_4$-alkyl,

$Z^1$ and $Z^2$ simply are each hydrogen or together are unsubstituted or $C_1$-$C_4$-alkyl-substituted $C_2$-$C_3$-alkylene, and

the rings A and B may each be amino-, chlorine-, bromine-, hydroxysulfonyl- or $C_1$-$C_6$-alkyl-substituted and/or benzofused.

6. An optical recording medium as claimed in claim 4, wherein

$R^1$ is $C_1$-$C_{12}$-alkyl, $C_1$-$C_{12}$-bromoalkyl, $C_1$-$C_{12}$-hydroxysulfonylalkyl or ($C_1$-$C_4$-alkoxycarbonyl)-$C_1$-$C_6$-alkyl, which may each be interrupted by from 1 to 3 oxygen atoms,

$R^2$ is hydrogen, chlorine, bromine or $C_1$-$C_3$-alkyl,

$Z^1$ and $Z^2$ are each hydrogen, and

the rings A and B are identical and unsubstituted.

## Revendications

1. Colorants de la série de la quinoxalinepentaméthine de formule I

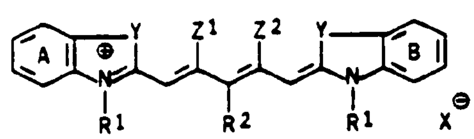

(I),

dans laquelle les restes

$R^1$ sont identiques ou différents et représentent chacun un atome d'hydrogène, un radical alkyle en $C_1$-$C_{22}$ qui est éventuellement substitué et peut être interrompu par un ou plusieurs atomes d'oxygène, ou un radical cycloalkyle en $C_5$-$C_7$ éventuellement substitué,

$R^2$ représente un atome d'hydrogène, de chlore ou de brome ou un radical alkyle en $C_1$-$C_6$,

Y sont identiques ou différents et représentent chacun un reste de formule $-N=C(CH_3)-$ ou $-N(R^1)-CO-$, $R^1$ ayant la signification susmentionnée,

$Z^1$ et $Z^2$ représentent chacun un atome d'hydrogène ou forment ensemble un radical alkylène en $C_2$-$C_3$ éventuellement substitué par un reste alkyle en $C_1$-$C_4$

$X^{\ominus}$ représente un anion et

les noyaux A et B sont identiques ou différents et sont, indépendamment l'un de l'autre, éventuellement substitués et/ou benzocondensés.

2. Colorants de la série de la quinoxaline-pentaméthine selon la revendication 1, caractérisés en ce que les restes
   - $R^1$ représentent chacun un atome d'hydrogène ou un radical alkyle en $C_1$-$C_{22}$ éventuellement interrompu par 1 à 3 atomes d'oxygène, bromoalkyle en $C_1$-$C_{22}$, hydroxyalkyle en $C_1$-$C_{12}$, méthacryloyloxyalkyle en $C_1$-$C_{12}$, hydroxysulfonylalkyle en $C_1$-$C_{12}$, carboxyalkyle en $C_1$-$C_6$ ou (alcoxy en $C_1$-$C_4$)carbonyl(alkyle en $C_1$-$C_6$),
   - $R^2$ représente un atome d'hydrogène, de chlore ou de brome ou un radical alkyle en $C_1$-$C_4$,
   - $Z^1$ et $Z^2$ représentent chacun un atome d'hydrogène ou forment ensemble un radical alkyléne en $C_2$-$C_3$ éventuellement substitué par un reste alkyle en $C_1$-$C_4$. et

   les noyaux A et B sont éventuellement substitués par des groupements amino, chloro, bromo, hydroxysulfonyle ou alkyle en $C_1$-$C_6$ et/ou benzocondensés.

3. Colorants de la série de la quinoxaline- pentaméthine selon la revendication 1, caractérisés en ce que les restes
   - $R^1$ représentent chacun un radical alkyle en $C_1$-$C_{12}$ interrompu par 1 a 3 atomes d'oxygène, bromoalkyle en $C_1$-$C_{12}$, hydroxysulfonylalkyle en $C_1$-$C_{12}$ ou (alcoxy en $C_1$-$C_4$)carbonyl( alkyle en $C_1$-$C_6$),
   - $R^2$ représente un atome d'hydrogène, de chlore ou de brome ou un radical alkyle en $C_1$-$C_3$,
   - $Z^1$ et $Z^2$ représentent chacun un atome d'hydrogène et

   les noyaux A et B sont non substitués.

4. Support d'enregistrement optique, comprenant un substrat et une couche contenant un colorant et sensible à la lumiére de laser, caractérisé en ce que le colorant est un colorant de la série de la quinoxaline-pentaméthine de formule I

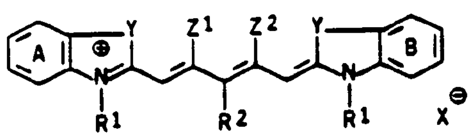

(I),

   dans laquelle les restes
   - $R^1$ sont identiques ou différents et représentent chacun un atome d'hydrogène, un radical alkyle en $C_1$-$C_{22}$ qui est éventuellement substitué et peut être interrompu par un ou plusieurs atomes d'oxygène, ou un radical cycloalkyle en $C_5$-$C_7$ éventuellement substitué,
   - $R^2$ représente un atome d'hydrogène, de chlore ou de brome ou un radical alkyle en $C_1$-$C_6$,
   - Y sont identiques ou différents et représentent chacun un reste de formule $-N=C(CH_3)-$ ou $-N(R_1)-CO-$, $R^1$ ayant la signification susmentionnée,
   - $Z^1$ et $Z^2$ représentent chacun un atome d'hydrogène ou forment ensemble un radical alkylène en $C_2$-$C_3$ éventuellement substitué par un reste alkyle en $C_1$-$C_4$
   - $X^{\ominus}$ représente un anion et

   les noyaux A et B sont identiques ou différents et sont, indépendamment l'un de l'autre, éventuellement substitués et/ou benzocondensés.

5. Support d'enregistrement optique selon la revendication 4, caractérisé en ce que les restes
   - $R^1$ représentent chacun un atome d'hydrogène ou un radical alkyle en $C_1$-$C_{22}$ éventuellement interrompu par 1 à 3 atomes d'oxygène, bromoalkyle en $C_1$-$C_{22}$, hydroxyalkyle en $C_1$-$C_{12}$, méthacryloyloxyalkyle en $C_1$-$C_{12}$, hydroxysulfonylalkyle en $C_1$-$C_{12}$, carboxyalkyle en $C_1$-$C_6$ ou (alcoxy en $C_1$-$C_4$)carbonyl(alkyle en $C_1$-$C_6$),
   - $R^2$ représente un atome d'hydrogène, de chlore ou de brome ou un radical alkyle en $C_1$-$C_4$,
   - $Z^1$ et $Z^2$ représentent chacun un atome d'hydrogène ou forment ensemble un radical alkylène en $C_2$-$C_3$ éventuellement substitué par un reste alkyle en $C_1$-$C_4$ et

   les noyaux A et B sont éventuellement substitués par des groupements amino, chloro, bromo, hydroxysulfonyle ou alkyle en $C_1$-$C_6$ et/ou benzocondensés.

6. Support d'enregistrement optique selon la revendication 4, caractérisé en ce que les restes

$R^1$ représentent chacun un radical alkyle en$C_1$-$C_{12}$ interrompu par 1 à 3 atomes d'oxygène, bromoalkyle en $C_1$-$C_{12}$, hydroxysulfonylalkyle en $C_1$-$C_{12}$ ou (alcoxy en $C_1$-$C_4$)carbonyl(alkyle en $C_1$-$C_6$),

$R^2$ représente un atome d'hydrogène, de chlore ou de brome ou un radical alkyle en $C_1$-$C_3$,

$Z^1$ et $Z^2$ représentent chacun un atome d'hydrogène et

les noyaux A et B sont identiques et non substitués.